# EUROPÄISCHE PATENTSCHRIFT

(11) **EP 0 519 225 B1**
(45) Veröffentlichungstag und Bekanntmachung des Hinweises auf die Patenterteilung: **14.02.1996**
(21) Anmeldenummer: 92108534.6
(22) Anmeldetag: 20.05.1992
(51) Int. Cl.: B01D 53/64, B01D 53/00, C04B 7/60

(54) **Verfahren und Vorrichtung zum Reinigen von Abgasen aus Ofenanlagen**
Process and apparatus for cleaning flue gases from furnace installations
Procédé et dispositif d'épuration des gaz d'échappement provenant des installations de fours

(30) Priorität: 19.06.1991 DE 4120277
(43) Veröffentlichungstag der Anmeldung: 23.12.1992
(73) Patentinhaber: KRUPP POLYSIUS AG, D-59269 Beckum (DE)
(72) Erfinder: Brentrup, Ludger, Dr.-Ing., W-4720 Oelde 1 (DE)
(74) Vertreter: Tetzner, Volkmar, Dr.-Ing. Dr. jur.

(56) Entgegenhaltungen:
- EP-A- 0 289 809
- EP-A- 0 411 412
- WO-A-91/16122
- DE-A- 4 018 786
- US-A- 3 755 989
- PATENT ABSTRACTS OF JAPAN vol. 009, no. 237 (C-305)24. September 1985

## Beschreibung

Die Erfindung betrifft ein verfahren sowie eine Vorrichtung gemäß dem Oberbegriff des Anspruches 13 zum Reinigen von Abgasen aus Ofenanlagen, insbesondere Industrieofenanlagen.

Reinigungsverfahren und -vorrichtungen der vorausgesetzten Art können bei Ofenanlagen, insbesondere Industrieofenanlagen für verschiedene Einsatzzwecke, wie zur Herstellung bestimmter Produkte oder auch zur Verbrennung von Abfällen und Müll, verwendet werden. Ein besonders typisches Beispiel hierfür ist in der nicht vorveröffentlichten DE-A-40 18 786 beschrieben. In diesem Falle geht es um die Herstellung von Zementklinker, bei der Zementrohmaterial in einer Vorwärmzone mit den heißen Abgasen einer Fertigbrennzone vorgewärmt und zumindest teilweise entsäuert wird, ehe das so vorgewärmte Material in der Fertigbrennzone zu Zementklinker fertiggebrannt wird. Hierbei werden die Abgase der zur Ofenanlage gehörenden Vorwärmzone in einer mehrstufigen, auf Trockenbasis arbeitenden Filterzone gereinigt, indem sie zunächst in einer ersten Filterstufe entstaubt und danach in wenigstens einer weiteren Filterstufe von NHₓ-Verbindungen und/oder Schwermetallen und Spurenelementen sowie SO₂ und NOₓ gereinigt werden. Vor der ersten Filterstufe sollen die ankommenden Abgase auf eine solche Filterzonen-Eingangstemperatur eingestellt werden, daß in dieser ersten Filterstufe zusammen mit dem anfallenden Filterstaub wenigstens ein Teil der leichtflüchtigen Schadstoffelemente und Verbindungen aus den Abgasen ausgeschieden werden, während die Einbindung der restlichen Schadstoffe und die NOₓ- und eventuell SO₂-Reduzierung in der weiteren Filterstufe (bzw. den weiteren Filterstufen) vorgenommen wird.

Bei dem in der ersten Filterstufe anfallenden Filterstaub handelt es sich überwiegend um feines Zementrohmaterial, so daß man aus wirtschaftlichen Gründen bestrebt ist, den angefallenen Filterstaub wieder in den Zementherstellungsprozeß zurückzuführen. Da in diesem Filterstaub jedoch auch die abgeschiedenen Schadstoffelemente und -verbindungen, wie z. B. leichtsiedende Schwermetalle, insbesondere Quecksilber, und ihre Verbindungen, enthalten sind, besteht die Gefahr, daß sich durch die Rückführung des Filterstaubes in den Zementherstellungsprozeß ein Kreislauf mit ständig steigenden Schadstoffgehalten aufbaut. Um einen solchen Kreislauf so weit wie möglich zu vermeiden oder in vertretbaren Grenzen zu halten, wird meist ein ausreichend großer Anteil des anfallenden Filterstaubes zusammen mit den darin enthaltenen Schadstoffelementen und -verbindungen aus der Zementklinker-Herstellungsanlage entfernt. Aufgrund des Gehalts an leichtsiedenden Schwermetaller, insbesondere Quecksilber, und ihren Verbindungen sowie anderen Schadstoffen kann dieser aus der Herstellungsanlage entfernte Filterstaub jedoch nicht in einer normalen (Haus-)Mülldeponie, sondern nur in einer Sondermülldeponie abgelagert werden, wobei hierzu zunächst ein besonderes Deponiematerial, beispielsweise aus Filterstaub, Zement und Anmachwasser, hergestellt werden muß, was - abgesehen von dem Deponievolumen - auch zu unerwünscht hohen Nebenkosten führt. Darüber hinaus ist auch an das Reststoff-Minimierungsgebot zu denken.

Der Erfindung liegt daher die Aufgabe zugrunde, ein Verfahren der im Oberbegriff des Anspruches 1 vorausgesetzten Art sowie eine Vorrichtung der im Oberbegriff des Anspruches 12 vorausgesetzten Art (insbesondere gemäß der DE-A-40 18 786) in der Weise weiterzuentwickeln, daß unter Beibehaltung der Vorteile dieser bekannten Ausführung hinsichtlich der Schadstoffabscheidungen auch der in der ersten Filterstufe anfallende Filterstaub möglichst weitgehend einer problemlosen Weiterverwendung zugeführt werden kann.

Diese Aufgabe wird erfindungsgemäß durch die im Kennzeichen des Anspruches 1 angegebenen Verfahrensschritte sowie durch die im Kennzeichen des Anspruches 12 angeführten Vorrichtungsmerkmale gelöst.

Vorteilhafte und zweckmäßige Ausgestaltungen und Weiterbildungen der Erfindung sind Gegenstand der Unteransprüche.

Nach dem erfindungsgemäßen Verfahren wird in dem in der ersten Filterstufe abgeschiedenen Filterstaub der Anteil an niedrigsiedenden Schwermetall- und anderen Schadstoffen sowie deren Verbindungen durch aufeinanderfolgende Verfahrensschritte verringert. In einem ersten Verfahrensschritt wird von dem abgeschiedenen Filterstaub zumindest eine - ausreichend große - Teilmenge, falls erforderlich auch der ganze Filterstaub, in einer Desorptionszone auf eine Temperatur erwärmt, bei der die genannten Schadstoffe und ihre Verbindungen verdampfen, also in ihre gasförmige Phase überführt werden. In einem zweiten Verfahrensschritt werden die in der Desorptionszone gebildeten Dämpfe mit Hilfe eines Trägergases dann in eine Entstaubungszone geführt und dort von den Staubanteilen (Staubpartikeln) befreit, d. h. es erfolgt hier eine Trennung einerseits in reinen Staub (Staubpartikel) und andererseits in ein reines Dampf-Trägergas-Gemisch, das die flüchtigen Schwermetallschadstoffe, andere flüchtige Schadstoffe sowie auch Verbindungen dieser Schwermetall- und anderen Schadstoffe enthält. Während der von diesen Schadstoffen befreite bzw. gereinigte Staub einer zweckmäßigen Verwendung zugeführt werden kann, wird in einem weiteren Verfahrensschritt das entstaubte Dampf-Trägergas-Gemisch zunächst auf eine Temperatur abgekühlt, die der zulässigen Eintrittstemperatur dieses Gemisches in eine ein kohlenstoffhaltiges Filtermedium enthaltende Filtereinheit entspricht, woraufhin dann dieses Dampf-Trägergas-Gemisch durch diese Filtereinheit geleitet wird. In dieser Filtereinheit werden mit Hilfe des kohlenstoffhaltigen Filtermediums - wie an sich bekannt - die Schwermetall-Schadstoffe und andere in diesem Gemisch enthaltene flüchtige Schadstoffe sowie eventuell vorhandene Verbindungen all dieser Schadstoffe durch Adsorption am Filtermedium aus dem Gemisch ausgefiltert. Diese Filtereinheit verläßt dann von Staub und den genannten flüchtigen Schadstoffen gereinigtes Trägergas bzw. Abgas, das vorzugsweise dem der ersten Filterstufe (Entstaubungsstufe) zuströmenden Roh-Abgas zugegeben bzw. zugemischt werden kann.

Vor allem bei der Herstellung von Zementklinker enthalten die aus einer entsprechenden Ofenanlage kommenden Abgase häufig einen besonders hohen Anteil an Quecksilber, so daß vor allem in diesen Fällen als niedrigsiedende Schwermetallschadstoffe insbesondere Quecksilber und seine Verbindungen im Filterstaub der ersten Filterstufe reduziert werden können. Weiterhin können jedoch doch in gleichartiger Weise auch vor allem Thallium und seine Verbindungen sowie Ammonium-Verbindungen im Filterstaub reduziert werden.

Besonders vorteilhaft ist dieses erfindungsgemäße Verfahren somit - wie zuvor bereits angedeutet - zum Reinigen der Abgase von Ofenanlagen zur Herstellung von Zementklinker, wobei Zementrohmaterial in einer Vorwärmzone mit heißen Abgasen einer Fertigbrennzone vorgewärmt und zumindest teilweise entsäuert wird, ehe das vorgewärmte Material in der Fertigbrennzone zu Zementklinker fertigebrannt wird. In diesem Falle werden in besonders zweckmäßiger Weise die in der Entstaubungszone nach der Desorptionszone anfallenden und - wie oben erläutert - von Schadstoffen befreiten Staubanteile in den Zementklinker-Herstellungsprozeß zurückgeführt. Dies bedeutet, daß, falls nur ein bestimmter Anteil des anfallenden Filterstaubes einer Desorption in der Desorptionszone unterworfen worden ist, diese von den Schadstoffen befreite Staubmenge der übrigen Filterstaubmenge wieder zugeführt wird, so daß das sich hierdurch ergebende Gemisch in ausreichender Weise insgesamt in seinen Schadstoffanteilen, insbesondere in seinen Anteilen an Quecksilber und dessen Verbindungen sowie ähnlich niedrigsiedenden Schwermetallschadstoffen, reduziert ist, wodurch sich eventuell ergebende Schadstoffkreisläufe, insbesondere Quecksilberkreisläufe auf einem vertretbar niedrigen Niveau gehalten werden können.

Der Filterstaub in der Desorptionszone kann zum Desorbieren der darin enthaltenen flüchtigen Schadstoffe und Schadstoffverbindungen auf eine Temperatur von etwa 100 bis 500 °C, vorzugsweise 200 bis 350 °C, insbesondere 250 bis 350 °C erwärmt werden. Dies geschieht vor allem in Anpassung an den Schadstoffgehalt im Filterstaub, wobei jedoch noch eine ausreichende Verweilzeit des Filterstaubes in dieser Desorptionszone zu berücksichtigen ist, um eine weitgehende bzw. völlige Verdampfung bzw. Desorption der im Filterstaub enthaltenen genannten Schadstoffe zu erreichen, wobei etwa bei einer relativ hohen Desorptionstemperatur eine relativ kurze Verweilzeit in der Desorptionszone und bei einer relativ niedrigen Desorptionstemperatur eine entsprechend längere Verweilzeit in dieser Desorptionszone zu berücksichtigen ist. Für die technische Durchführung dieses erfindungsgemäßen Verfahrens kann ein Temperaturbereich von etwa 250 bis 350 °C (eventuell auch etwas höher) und eine Verweilzeit im Bereich von ca. 10 bis 20 Minuten als besonders zweckmäßig angesehen werden.

Da es nach dem erfindungsgemäßen Verfahren in der Desorptionszone vor allem darum geht, den Filterstaub in der zuvor erwähnten Weise zu erwärmen und für eine ausreichende bzw. auch vorgegebene Zeit auf der zweckmäßigen Temperatur zu halten, können die Verfahrensschritte zur Reduzierung der genannten niedrigsiedenden Schadstoffe und ihrer Verbindungen aus dem Filterstaub kontinuierlich oder auch diskontinuierlich im Chargenbetrieb durchgeführt werden. Falls nur relativ geringe Mengen an Filterstaub in der ersten Filterstufe anfallen, dann kann im allgemeinen eine diskontinuierliche Betriebsweise zweckmäßig und wirtschaftlich sein, während bei größeren Filterstaubmengen im allgemeinen eine kontinuierliche Betriebsweise vorzuziehen ist.

In der Desorptionszone bestehen generell die Möglichkeiten, den Filterstaub direkt oder indirekt zu erwärmen. Besonders bevorzugt wird jedoch die indirekte Erwärmung des Filterstaubes, der dann zusammen mit den gebildeten Schadstoffdämpfen mittels angesaugter Falschluft als Trägergas aus dieser Desorptionszone abgeführt wird. Diese bevorzugte Art der indirekten Erwärmung und Abführung mittels angesaugter Falschluft bringt nur relativ kleine Strömungsvolumina mit sich, so daß die entsprechenden Einrichtungen für die nachfolgende Staubabscheidung sowie die Filtereinheit für entsprechend kleine Strömungsvolumina mit daraus resultierenden kleinen Bauvolumen ausgelegt werden können, wodurch sich außerdem auch ein entsprechend kleiner Energieverbrauch erzielen läßt. Weiterhin ist hier zu berücksichtigen, daß relativ kleine Gasvolumenströme und damit relativ kleine Strömungsgeschwindigkeiten eine unerwünscht große Staubaufwirbelung vermeiden, wodurch eine intensivere Desorptionsbehandlung (mit kürzerer Verweilzeit) in der Desorptionszone erreicht werden kann. Schließlich bietet die indirekte Erwärmung des Filterstaubes in der Desorptionszone noch den Vorteil, daß sich der Volumenstrom des Trägergases beliebig wählen bzw. steuern läßt, d. h. es besteht hier beispielsweise die Möglichkeit, mit geringen Strömungsgeschwindigkeiten in einem als Desorptionszone dienenden Ofen zu arbeiten, wobei dieser Gasvolumenstrom strom vor allem von dem im Filterstaub benötigten Wärmeeintrag und der notwendigen Temperatur bestimmt wird.

Bei diesem erfindungsgemäßen Verfahren kann das entstaubte Dampf-Trägergas-Gemisch besonders einfach auf die für die Filtereinheit zulässige Eintrittstemperatur abgekühlt werden, wenn ihm im Bereich zwischen der Entstaubungszone und der Filtereinheit ein Kühlgas, insbesondere Kühlluft direkt zugemischt wird.

Als Filtermedium in der Filtereinheit wird vor allem Aktivkoks und/oder Aktivkohle verwendet, wobei es noch besonders vorgezogen werden kann, solche Aktivkokse bzw. Aktivkohlen zu verwenden, die mit Schwefelsäure angereichert sind, wodurch sich eine deutlich verbesserte Abscheidung von Schwermetallen, insbesondere von Quecksilber und seinen Verbindungen erzielen läßt.

Wenn man im zuletzt genannten Zusammenhang davon ausgeht, daß in der von den zu reinigenden Abgasen nach der ersten Filterstufe durchsetzten weiteren Filterstufe ebenfalls Aktivkoks und/oder Aktivkohle verwendet wird und diese während des Reinigungsprozesses der Abgase wenigstens teilweise mit Schwefelsäure beladen und ausreichend beladene Aktivkoks- und Aktivkohleanteile von Zeit zu Zeit durch frisches Material ersetzt werden, dann können in vorteilhafter Weise als Filtermedium in der Filtereinheit (nach der Desorptionszone) aus der weiteren Filterstufe für die Abgase stammende, mit Schwefelsäure beladene Aktivkoks- und/oder Aktivkohleanteile verwendet werden.

Eine Vorrichtung zum Reinigen von Abgasen aus Ofenanlagen, insbesondere Industrieofenanlagen (vor allem zur Herstellung von Zementklinker), gemäß dem Oberbegriff des Anspruches 12 ist erfindungsgemäß gekennzeichnet durch eine nahe dem ersten Filter angeordnete und mit dessen Staubaustragsorgan verbundene, für die Reduzierung von niedrigsiedenden Schwermetall-Schadstoffen und deren Verbindungen aus dem Filterstaub ausgebildete Einrichtung, die einen Desorptionsofen für die Erwärmung von Filterstaub auf Verdampfungstemperatur für die genannten Schadstoffe, einen mit einem Dampf-Trägergas-Gemisch aus dem Desorptionsofen beaufschlagbaren Staubabscheider, eine abströmseitig vom Staubabscheider angeordnete Kühleinrichtung für das entstaubte Dampf-Trägergas-Gemisch sowie eine hinter der Kühleinrichtung angeordnete Filtereinheit enthält, in der mehrere, wechselweise mit dem Dampf-Trägergas-Gemisch beaufschlagbare Filterbetten mit einem kohlenstoffhaltigen Filtermedium zur Abscheidung der Schwermetallschadstoffe und ihrer Verbindungen aus diesem strömenden Gemisch vorgesehen sind.

Die Erfindung sei nachfolgend noch anhand der Zeichnung näher erläutert. In dieser vereinfacht dargestellten Zeichnung zeigen
- Fig.1: ein Gesamtschema einer Ofenanlage zur Herstellung von Zementklinker mit einer Vorrichtung zur Reinigung der Abgase dieser Ofenanlage;
- Fig.2: ein vergrößertes Teilschema eines einem Staubabscheidefilter (1. Filter) der Abgas-Reinigungsvorrichtung unmittelbar nachgeordneten Anlagenteiles zur Schadstoffreduktion im Filterstaub.

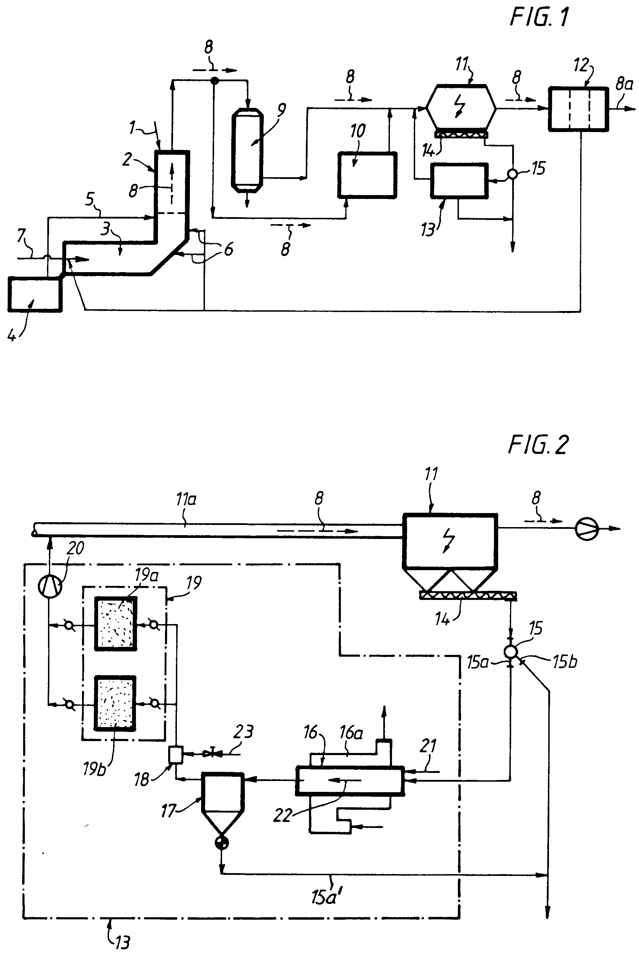

In Fig.1 ist eine besonders typische Anwendungsmöglichkeit des zuvor beschriebenen erfindungsgemäßen Verfahrens anhand einer Ofenanlage zur Herstellung von Zementklinker veranschaulicht. Diese Ofenanlage kann in jeder geeigneten Weise ausgeführt sein, so daß nachfolgend lediglich die wichtigsten Anlagenteile kurz beschrieben schrieben sind. Diese Ofenanlage enthält dementsprechend einen zur Vorwärmung und zumindest teilweisen Entsäuerung des Rohmateriales (Pfeil 1) dienenden Vorwärmer 2, einen zum Fertigbrennen des vorgewärmten und entsäuerten Materiales dienenden Fertigbrennofen in Form eines Drehrohrofens 3 sowie einen Kühler 4 zum Abkühlen des fertiggebrannten Zementklinkers. Dem unteren Teil des Vorwärmers 2 kann erhitzte Kühlerabluft (Pfeil 5) und zusätzlicher Brennstoff (Pfeile 6) für die weitgehende Entsäuerung (Vorcalcination) des vorgewärmten Rohmateriales zugeführt werden. Der Drehrohrofen 3 wird von seiner Gutaustragsseite her befeuert (Pfeil 7). Die Abgase (Pfeile 8) des Drehrohrofens 3 durchsetzen in an sich bekannter Weise den Vorwärmer 2 (zwecks Vorwärmens des Rohmateriales) und gelangen dann aus der Ofenanlage wahlweise entweder im Direktbetrieb über einen Kühlturm 9 oder im Verbundbetrieb durch eine Robmühle 10 (die zur Mahltrocknung des Rohmateriales dient) in eine mehrstufige Filterzone, die als erste Filterstufe einen ersten Filter, vorzugsweise Elektrofilter 11, sowie wenigstens einen zweiten Filter 12 als zweite Filterstufe enthält.

Während der erste Filter 11 zur Abscheidung von Staub aus den Ofenabgasen ausgebildet ist, enthält der zweite Filter 12 vorzugsweise mehrere Filterkammern, die von den entstaubten Abgasen nacheinander durchströmt werden und jeweils ein kohlenstoffhaltiges Filtermedium (insbesondere Aktivkoks und/oder Aktivkohle) enthalten, das nach einer bestimmten Beladung mit NHₓ-Verbindungen, Schwermetallen, Spurenelementen und Schwefeldioxid wenigstens teilweise aus den entsprechenden Filterkammern ausgeschleust und erneuert werden kann. Das hier ausgeschleuste Filtermedium wird vorzugsweise dem Einlaufbereich des Drehrohrofens 3 (im Bereich der Vorcalcinierzone am unteren Ende des Vorwärmers 2) und eventuell bzw. alternativ der Brennstelle (bei Pfeil 7) des Drehrohrofens 3 aufgegeben. Die Ausfuhrung und Betriebsweise dieser mehrstufigen Filterzone (11, 12) kann weitgehend der gemäß der eingangs erläuterten älteren DE-A-40 18 786 oder einer ähnlichen Betriebsweise entsprechen, so daß dies hier nicht näher erläutert zu werden braucht.

Zur Durchführung des weiter oben beschriebenen erfindungsgemäßen Verfahrens ist in unmittelbarer Nähe des ersten Filters 11 ein Anlagenteil bzw. eine Einrichtung 13 zur Schadstoffreduktion im Filterstaub angeordnet, der in diesem ersten Filter 11 aus dem Ofen- bzw. Vorwärmerabgasstrom 8 abgeschieden worden ist. Diese Einrichtung 13 ist in dem Gesamtschema gemäß Fig.1 lediglich in Form eines kastenförmigen Blockes dargestellt, während sie in Fig.2 in vergrößertem Maßstab mit ihren hier insbesondere interessierenden Einrichtungsteilen sowie im Zusammenhang mit dem ersten Filter 11 näher veranschaulicht ist, worauf nachfolgend näher eingegangen wird.

Zum Sammeln und Austragen des im ersten Filter 11 aus den Abgasen 8 ausgeschiedenen Staubes ist dieser erste Filter 11 mit einem Staubaustragsorgan (z. B. eine Austragsschnecke) 14 versehen. Diesem Staubaustragsorgan 14 ist zweckmäßig eine vorzugsweise einstellbare Staubmengen-Aufteileinrichtung 15 mit zwei Abzweigleitungen 15a und 15b nachgeordnet, von denen die eine Abzweigleitung 15a wenigstens eine Teilmenge des Filterstaubes in die Schadstoffreduktionseinrichtung 13 leitet, während die zweite Abzweigleitung 15b mit der Ofenanlage zur Herstellung von Zementklinkern in Verbindung steht, um Filterstaub in den Zementklinker-Herstellungsprozeß zurückzuführen.

Als Haupteinrichtungsteile enthält die Schadstoffreduktionseinrichtung 13 einen Desorptionsofen 16, einen diesem Desorptionsofen in Strömungsrichtung (vgl. Pfeile) nachgeordneten Staubabscheider 17, eine abströmseitig vom Abscheider 17 angeordnete Kühleinrichtung 18 sowie eine hinter der Kühleinrichtung 18 angeordnete Filtereinrichtung 19, in der mehrere, wechselweise betreibbare Filterbetten 19a, 19b vorgesehen sind, die jeweils ein kohlenstoffhaltiges Filtermedium, vorzugsweise Aktivkoks und/oder Aktivkohle, zur Abscheidung von flüchtigen Schwermetallschadstoffen, insbesondere Quecksilber, und ihren Verbindungen sowie anderen flüchtigen Schadstoffverbindungen aus einem strömenden Dampf-Trägergas-Gemisch enthalten. Dieser Filtereinheit 19 ist wiederum ein Sauggebläse 20 nachgeschaltet, um die in der Filtereinheit 19 gereinigten Gase (Abgase) abzusaugen und abzuführen, insbesondere den dem ersten Filter 11 in einer Eintrittsleitung 11a zuströmenden Abgasen 8 zuzuführen.

Der eine Desorptionszone bildende Desorptionsofen 16 ist vorzugsweise ein indirekt beheizter Ofen, der in jeder geeigneten Weise ausgeführt sein kann, wobei im veranschaulichten Ausführungsbeispiel ein Drehrohrofen vorgesehen ist, dessen Mantel auf der Außenseite von einem Heizmantel 16a umgeben ist, der in an sich bekannter Weise mit einem geeigneten Brennstoff (z. B. Öl oder Gas) beheizt werden kann. Dabei ist eine solche Beheizung vorgesehen, daß in diesem Desorptionsofen 16 eine Erwärmung des zugeführten Filterstaubes auf eine Verdampfungstemperatur für die weiter oben genannten Schadstoffarten, insbesondere Quecksilber und seine Verbindungen, erzielt und somit eine Desorption dieser niedrigsiedenden Schadstoffe aus dem Filterstaub herbeigeführt werden kann.

Aufgrund des vom Sauggebläse 20 ausgehenden Saugzuges kann eine einstellbare bzw. wählbare Menge an Falschluft (Pfeil 21) durch das Innere des Desorptionsofens 16 in der Weise in Richtung des Pfeiles 22 hindurchgesaugt werden, daß die im Ofen stattfindende Erwärmung und Desorption so wenig wie möglich beeinträchtigt wird und die dabei entstehenden Schadstoffdämpfe zusammen mit den von diesen Schadstoffen befreiten Staubpartikeln in Form eines Dampf-Trägergas-Gemisches aus diesem Ofen 16 ausgetragen und dem nachfolgend angeordneten Abscheider 17 zugeführt werden. Dieser Staubabscheider 17 kann in jeder geeigneten Ausführung vorgesehen sein, beispielsweise in Form einer einfachen, aber ausreichend wirksamen Staubabsetzkammer oder auch in Form wenigstens eines Staubabscheidezyklons. Wichtig ist dabei vor allem, daß in diesem Staubabscheider 17 der Staub bzw. die Staubpartikel, der bzw. die von den verdampften Schadstoffen befreit sind, abgeschieden und über eine Staubleitung 15a' (Fig. 2) für die Weiterverwendung - zusammen mit der nichtschadstoffreduzierten Staubmenge - in den Zementklinker-Herstellungsprozeß zurückgeführt werden kann. Das von diesem Staubanteil befreite Dampf-Trägergas-Gemisch strömt aus dem Staubabscheider 17 ab und wird auf dem Wege zur Filtereinheit 19 durch die Kühleinrichtung 18 geleitet, in der es vorzugsweise mit Hilfe von Kühlluft (Pteil 23) auf eine Temperatur abgekühlt wird, die für ein Einführen dieses Dampf-Trägergas-Gemisches in eines der Filterbetten 19a oder 19b bzw. in das darin enthaltene kohlenstoffhaltige Filtermedium zulässig ist. Diese Filtereinheit-Eintrittstemperatur kann etwa im Bereich von 100 °C liegen. Bei dem Hindurchleiten dieses Gemisches durch das Aktivkoks- bzw. Aktivkohle-Filterbett 19a oder 19b werden insbesondere Quecksilber und seine Verbindungen, ggf. aber auch andere ähnlich niedrigsiedende Schwermetallschadstoffe und ggf. Ammoniumverbindungen aus dem Gemisch abgeschieden, so daß aus der Gasaustrittsseite der Filtereinheit 19 ein gereinigtes Abgas austritt und über das Sauggebläse 20 in der erwähnten Weise abgeführt werden kann.

Jedes wechselweise über angedeutete Stellklappen mit dem genannten Gemisch beaufschlagbare Filterbett 19a, 19b enthält eine austauschbare Schüttung vorzugsweise aus Aktivkoks und/oder Aktivkohle. Es kann sich dabei um relativ kleine Filterbetten handeln, die für eine ausreichende Abscheidung der gasförmigen (verdampften) und aufgrund der Abkühlung (über Kühleinrichtung 18) wenigstens teilweise kondensierten Schadstoffe ausgelegt sind.

Da die Schadstoffreduktionseinrichtung 13 und vor allem auch der Desorptionsofen 16 in unmittelbarer Nähe des ersten Filters 11 angeordnet wird, kann der zu reduzierende Filterstaub mit relativ hoher Temperatur in diesen Desorptionsofen 16 eintreten. Auf diese Weise können auch die benötigten zusätzlichen Einrichtungsteile (z. B. Leitungen, Klappen und dgl.) sowie die Energiekosten (insbesondere Heizkosten für Ofen 16 sowie Betriebskosten für Sauggebläse 20) in vertretbar niedrigen Kosten gehalten werden.

Es sei schließlich nochmals betont, daß die von der Ofenanlage kommenden Abgase (Pfeile 8) selbst ansonsten in gleicher Weise in der mehrstufigen Filterzone (mit den Filtern 11 und 12) durch physikalisch-chemische Mechanismen (Adsorption der Schadstoffe, Chemisorption, katalytische Wirkung der kohlenstoffhaltigen Filtermedien) gereinigt werden können, wie es in dem älteren Vorschlag gemäß DE-A-40 18 786 etwa beschrieben ist.

## Patentansprüche

1. Verfahren zum Reinigen von Abgasen von Ofenanlagen zur Herstellung von Zementklinker, wobei Zementrohmaterial in einer Vorwärmzone mit heißen Abgasen einer Fertigbrennzone vorgewärmt und zumindest teilweise entsäuert wird, ehe das vorgewärmte Material in der Fertigbrennzone zu Zementklinker fertiggebrannt wird, wobei die Abgase zunächst durch eine erste Filterstufe hindurchgeleitet werden, in der insbesondere eine Abscheidung von Staub erfolgt, und danach die entstaubten Abgase wenigstens eine zweite Filterstufe durchströmen, die ein kohlenstoffhaltiges Filtermedium enthält, in das in den Abgasen enthaltene NHₓ-Verbindungen und/oder flüchtige Schadstoffelemente und -verbindungen, wie Schwermetalle, Spurenelemente und Schwefel-Dioxid, eingebunden werden,
dadurch gekennzeichnet, daß
a) in dem in der ersten Filterstufe abgeschiedenen Filterstaub der Anteil an niedrigsiedenden Schwermetall-Schadstoffen und deren Verbindungen dadurch verringert wird, daß
a₁) von dem abgeschiedenen Filterstaub zumindest eine Teilmenge in einer Desorptionszone auf eine Temperatur erwärmt wird, bei der die Schwermetall-Schadstoffe und ihre Verbindungen verdampfen,
a₂) daß die in der Desorptionszone gebildeten Dämpfe mit Hilfe eines Trägergases in eine Entstaubungszone geführt und dort von den Staubanteilen befreit werden,
a₃) und daß das entstaubte Dampf-Trägergas-Gemisch abgekühlt und durch eine ein kohlenstoffhaltiges Medium enthaltende Filtereinheit geleitet wird, in der die SchwermetallSchadstoffe und ihre Verbindungen durch Adsorption am Filtermedium aus dem Gemisch ausgefiltert werden,
b) und daß die in der Entstaubungszone nach der Desorptionszone anfallenden Staubanteile in den Zementklinker-Herstellungsprozeß zurückgeführt werden.

2. Verfahren nach Anspruch 1, dadurch gekennzeichnet, daß der Filterstaub in der Desorptionszone auf eine Temperatur von etwa 100 bis 500 °C, vorzugsweise 200 bis 350 °C, insbesondere 250 bis 350 °C, erwärmt wird.

3. Verfahren nach Anspruch 1, dadurch gekennzeichnet, daß die Verfahrensschritte zur Verringerung der niedrigsiedenden Schadstoffe und ihrer Verbindungen kontinuierlich durchgeführt werden.

4. Verfahren nach Anspruch 1, dadurch gekennzeichnet, daß die Verfahrensschritte zur Verringerung der niedrigsiedenden Schadstoffe und ihrer Verbindungen diskontinuierlich im Chargenbetrieb durchgeführt werden.

5. Verfahren nach Anspruch 1, dadurch gekennzeichnet, daß insbesondere der Anteil von Quecksilber und seinen Verbindungen im Filterstaub verringert wird.

6. Verfahren nach Anspruch 1, dadurch gekennzeichnet, daß der Filterstaub in der Desorptionszone indirekt erwärmt und zusammen mit den gebildeten Schadstoffdämpfen mittels angesaugter Falschluft als Trägergas aus dieser Desorptionszone abgeführt wird.

7. Verfahren nach Anspruch 1, dadurch gekennzeichnet, daß das Dampf-Trägergas-Gemisch im Bereich zwischen der Entstaubungszone und der Filtereinheit mittels direkt zugeführter Kühlluft auf die für diese Filtereinheit zulässige Eintrittstemperatur abgekühlt wird.

8. Verfahren nach Anspruch 7, dadurch gekennzeichnet, daß als Filtermedium in der Filtereinheit Aktivkoks und/oder Aktivkohle verwendet werden, die vorzugsweise mit Schwefelsäure angereichert sind.

9. Verfahren nach Anspruch 8, dadurch gekennzeichnet, daß als Filtermedium in der Filtereinheit aus der zweiten Filterstufe für die Abgase stammende, mit Schwefelsäure beladene Aktivkoks- und/oder Aktivkohleanteile verwendet werden.

10. Verfahren nach Anspruch 1, dadurch gekennzeichnet, daß das von den flüchtigen Schadstoffen und seinen Verbindungen befreite Gas nach Verlassen der Filtereinheit den von der Ofenanlage kommenden Abgasen vor deren Eintritt in die erste Filterstufe zugegeben wird.

11. Verfahren nach Anspruch 1, dadurch gekennzeichnet, daß von dem in der ersten Filterzone ausgeschiedenen Filterstaub eine erste Teilmenge direkt in den Zementklinker-Herstellungsprozeß zurückgeführt und eine zweite Teilmenge in die Desorptionszone geleitet wird.

12. Vorrichtung zum Reinigen von Abgasen aus Ofenanlagen zur Herstellung von Zementklinker, enthaltend
- einen Vorwärmer (2) zur Vorwärmung und wenigstens teilweisen Entsäuerung des Rohmateriales,
- einen Fertigbrennofen (3) zum Fertigbrennen des entsäuerten Materiales,
- einen Kühler (4) zum Kühlen des fertiggebrannten Zementklinkers,
- sowie einen, einem ersten Filter (11) zur Abscheidung von Staub in Abgasströmungsrichtung nachgeschalteten zweiten Filter (12), der ein zur Einbindung von NHₓ-Verbindungen und/oder Schwermetallen und Spurenelementen geeignetes, kohlenstoffhaltiges Filtermedium enthält,
gekennzeichnet durch
a) eine nahe dem ersten Filter (11) angeordnete und mit dessem Staubaustragsorgan (14) verbundene, für die Verringerung des Anteils von niedrigsiedenden SchwermetallSchadstoffen und deren Verbindungen im Filterstaub ausgebildete Einrichtung (13), die
a₁) einen Desorptionsofen (16) für die Erwärmung von Filterstaub auf Verdampfungstemperatur für die genannten Schadstoffe,
a₂) einen mit einem Dampf-Trägergas-Gemisch aus dem Desorptionsofen beaufschlagbaren Staubabscheider (17),
a₃) eine abströmseitig vom Staubabscheider angeordnete Kühleinrichtung (18) für das entstaubte Dampf-Trägergasgemisch
a₄) sowie eine hinter der Kühleinrichtung angeordnete Filtereinheit (19) enthält, in der mehrere, wechselweise mit dem Dampf-Trägergas-Gemisch beaufschlagbare Filterbetten (19a, 19b) mit einem kohlenstoffhaltigen Filtermedium zur Abscheidung der Schwermetall-Schadstoffe und ihrer Verbindungen aus dem strömenden Gemisch vorgesehen sind,
b) und durch eine Staubleitung (15a') zum Zurückführen des von Schadstoffen befreiten Staubes in den Klinkerherstellungsprozeß.

13. Vorrichtung nach Anspruch 12, dadurch gekennzeichnet, daß der Desorptionsofen (19) ein indirekt beheizter Ofen, vorzugsweise ein indirekt beheizter Drehrohrofen, ist.

14. Vorrichtung nach Anspruch 12, dadurch gekennzeichnet, daß die Filtereinheit (19) in jedem Filterbett (19a, 19b) eine austauschbare Schüttung aus Aktivkoks und/oder Aktivkohle als Filtermedium enthält.

15. Vorrichtung nach Anspruch 12, dadurch gekennzeichnet, daß dem Staubaustragsorgan (14) des ersten Filters (11) eine Staubmengen-Aufteileinrichtung (15) mit zwei Abzweigen (15a, 15b) zugeordnet ist, von denen der eine Abzweig (15a) mit der Einlaufseite des Desorptionsofens (16) und die zweite Abzweigleitung (15b) mit der Ofenanlage in Verbindung steht.

16. Vorrichtung nach Anspruch 12, dadurch gekennzeichnet, daß eine Gasaustrittsseite der Filtereinheit (19) mit der Abgaseintrittsleitung (11a) des ersten Filters (11) über ein Sauggebläse (20) verbunden ist.

## Claims

1. Method of purifying exit gases from kiln installations for the production of cement clinker, wherein cement raw material is preheated in a preheating zone with hot exit gases from a final burning zone and at least partially deacidified before the preheated material is finally burnt in the final burning zone to produce cement clinker, wherein the exit gases are first of all passed through a first filter stage in which in particular precipitation of dust takes place, and then the dedusted exit gases flow through at least one second filter stage which contains a carbonaceous filter medium into which the NHₓ compounds and/or volatile pollutant elements and compounds, such as heavy metals, trace elements and sulphur dioxide, contained in the exit gases are bound, characterised in that
a) in the filter dust precipitated in the first filter stage the proportion of low-boiling heavy metal pollutants and their compounds is reduced by:
a₁ ) heating at least a part-quantity of the precipitated filter dust in a desorption zone to a temperature at which the heavy metal pollutants and their compounds vaporize,
a₂) passing the vapours formed in the desorption zone with the aid of a carrier gas into a dust extraction zone and there freeing them of the quantities of dust,
a₃) cooling the dedusted mixture of vapour and carrier gas and passing it through a filter unit which contains a carbonaceous medium and in which the heavy metal pollutants and their compounds are filtered out of the mixture by adsorption on the filter medium,
b) returning the cement clinker production process the quantities of dust collected in the dust extraction zone after the desorption zone.

2. Method as claimed in claim 1, characterised in that the filter dust is heated in the desorption zone to a temperature of approximately 100 to 500 °C, preferably 200 to 350 °C, particularly 250 to 350 °C.

3. Method as claimed in claim 1, characterised in that the method steps for reduction of the low-boiling pollutants and their compounds are carried out continuously.

4. Method as claimed in claim 1, characterised in that the method steps for reduction of the low-boiling pollutants and their compounds are carried out discontinuously in a batch process.

5. Method as claimed in claim 1, characterised in that in particular the proportion of mercury and its compounds in the filter dust is reduced.

6. Method as claimed in claim 1, characterised in that the filter dust is indirectly heated in the desorption zone and is removed from this desorption zone together with the formed pollutant vapours by means of infiltrated air which is drawn in as carrier gas.

7. Method as claimed in claim 1, characterised in that the mixture of vapour and carrier gas is cooled in the region between the dust extraction zone and the filter unit by means of directly delivered cooling air to the acceptable inlet temperature for this filter unit.

8. Method as claimed in claim 7, characterised in that activated coke and/or activated carbon, which are preferably enriched with sulphuric acid, are used as the filter medium in the filter unit.

9. Method as claimed in claim 8, characterised in that quantities of activated coke and/or activated carbon charged with sulphuric acid and originating from the second filter stage for the exit gases are used as the filter medium in the filter unit.

10. Method as claimed in claim 1, characterised in that after leaving the filter unit the gas freed of the volatile pollutants and their compounds is added to the exit gases coming from the kiln installation before they enter the first filter stage.

11. Method as claimed in claim 1, characterised in that of the filter dust precipitated in the first filter zone a first part-quantity is returned directly to the cement clinker production process and a second part-quantity is passed to the desorption zone.

12. Apparatus for purifying exit gases from kiln installations for the production of cement clinker, containing:
- a preheater (2) for preheating and at least partially deacidifying the raw material,
- a final burning kiln (3) for final burning of the de-acidified material,
- a cooler (4) for cooling the finally burnt cement clinker,
- and a second filter (12) which is arranged after this first filter (11) for the precipitation of dust in the direction of flow of the exit gas and which contains a carbonaceous filter medium which is suitable for binding NHₓ compounds and/or heavy metals and trace elements,
characterised by
a) a device (13) which is arranged near the first filter (11) and connected to its dust discharge device (14) and is constructed for the reduction of the quantity of low-boiling heavy metal pollutants and their compounds in the filter dust, wherein the said device contains
a₁ ) a desorption kiln (16) for heating filter dust to evaporation temperature for the said pollutants,
a₂) a dust precipitator (17) to which the mixture of vapour and carrier gas from the desorption kiln can be passed,
a₃) a cooling arrangement (18) for the dedusted mixture of vapour and carrier gas arranged downstream of the dust precipitator,
a₄) as well as a filter unit (19) which is arranged behind the cooling arrangement and in which several filter beds (19a, 19b) to which the mixture of vapour and carrier gas can be passed alternately are provided with a carbonaceous filter medium for precipitation of the heavy metal pollutants and their compounds out of this flowing mixture,
b) and by a dust duct (15a') for returning the dust freed from pollutants to the clinker production process.

13. Apparatus as claimed in claim 12, characterised in that the desorption kiln (19) is an indirectly heated kiln, preferably an indirectly heated rotary kiln.

14. Apparatus as claimed in claim 12, characterised in that the filter unit (19) contains a replaceable store of activated coke and/or activated carbon as the filter medium in each filter bed (19a, 19b).

15. Apparatus as claimed in claim 12, characterised in that an arrangement (15) for distributing quantities of dust with two branches (15a, 15b) is associated with the dust discharge device (14) of the first filter (11), and of these branches one branch (15a) is connected to the inlet side of the desorption kiln (16) and the second branch duct (15b) is connected to the kiln installation.

16. Apparatus as claimed in claim 12, characterised in that a gas outlet side of the filter unit (19) is connected to the exit gas inlet duct (11a) of the first filter (11) via a suction fan (20).

## Revendications

1. Procédé d'épuration des gaz évacués d'installations à four de production de clinker de ciment, la matière première du ciment étant réchauffée dans une zone de réchauffage par les gaz chauds évacués d'une zone d'achèvement de la calcination et étant au moins partiellement désacidifiée avant que la matière réchauffée subisse l'achèvement de la calcination dans la zone correspondante pour être transformée en clinker de ciment, les gaz évacués étant tout d'abord dirigés dans un premier étage de filtration dans lequel a lieu en particulier une séparation de la poussière, puis ensuite les gaz évacués et dépoussiérés passant par au moins un second étage de filtration qui contient un milieu filtrant carboné dans lequel les composés de NHₓ et/ou les éléments et composés volatiles de substances nocives tels que des métaux lourds, oligo-éléments ainsi que l'anhydride sulfureux que contiennent les gaz évacués sont captés,
caractérisé en ce que
a) la fraction des substances nocives à base de métaux lourds à bas point d'ébullition ainsi que de leurs composés est réduite dans la poussière filtrée, séparée dans le premier étage de filtration par le fait que
a₁) au moins une partie de la poussière séparée par filtration est chauffée dans une zone de désorption à une température à laquelle les substances nocives à base de métaux lourds et de leurs composés s'évaporent,
a₂) que les vapeurs formées dans la zone de désorption sont dirigées à l'aide d'un gaz vecteur dans une zone de dépoussiérage et y sont débarrassées des fractions de poussière,
a₃) et que le mélange dépoussiéré de vapeur et de gaz vecteur est refroidi et dirigé dans un dispositif de filtration contenant un milieu carboné et dans lequel les substances nocives à base de métaux lourds et de leurs composés sont éliminées du mélange par adsorption sur le milieu filtrant,
b) et en ce que les fractions de poussière provenant de la zone de dépoussiérage faisant suite à la zone de désorption sont dirigées dans le processus de production de clinker de ciment.

2. Procédé selon la revendication 1, caractérisé en ce que la poussière de filtration est chauffée dans la zone de désorption à une température d'environ 100 à 500° C, de préférence de 200 à 350° C, en particulier de 250 à 350° C.

3. Procédé selon la revendication 1 caractérisé en ce que les étapes du procédé de diminution des substances nocives et de leurs composés à bas point d'ébullition sont exécutées en continu.

4. Procédé selon la revendication 1, caractérisé en ce que les étapes du procédé de diminution des substances nocives et de leurs composés à bas point d'ébullition sont exécutées en discontinu par charges successives.

5. Procédé selon la revendication 1, caractérisé en ce qu'en particulier la fraction de mercure et de ses composés se trouvant dans la poussière de filtration subit une diminution.

6. Procédé selon la revendication 1, caractérisé en ce que la poussière de filtration est chauffée indirectement dans la zone de désorption et évacuée de cette zone de désorption avec les vapeurs formées de substances nocives au moyen d'air parasite aspiré, formant un gaz vecteur.

7. Procédé selon la revendication 1, caractérisé en ce que le mélange de vapeur et de gaz vecteur est refroidi dans la région comprise entre la zone de dépoussiérage et le dispositif de filtration au moyen d'air de refroidissement arrivant directement à la température admissible d'entrée dans ce dispositif de filtration.

8. Procédé selon la revendication 7, caractérisé en ce que le milieu filtrant utilisé dans le dispositif de filtration est du coke actif et/ou du charbon actif qui sont de préférence enrichis en acide sulfurique.

9. Procédé selon la revendication 8, caractérisé en ce que le milieu filtrant utilisé dans le dispositif de filtration est des fractions de coke actif et/ou du charbon actif qui proviennent du second étage de filtration des gaz évacués et qui sont chargées en acide sulfurique.

10. Procédé selon la revendication 1, caractérisé en ce que le gaz débarrasé des substances nocives volatiles et de ses composés est dirigé, après qu'il ait quitté le dispositif de filtration, dans les gaz évacués, provenant de l'installation à four, avant l'entrée de ceux-ci dans le premier étage de filtration.

11. Procédé selon la revendication 1, caractérisé en ce qu'une première partie de la poussière de filtration séparée dans la première zone de filtration est dirigée directement dans le processus de production de clinker de ciment et une seconde partie est dirigée dans la zone de désorption.

12. Dispositif d'épuration des gaz évacués d'installations à four de production de clinker de ciment, comprenant :
- un réchauffeur (2) pour le réchauffage et la désacidification au moins partielle de la matière première,
- un four (3) d'achèvement de la calcination de la matière désacidifiée,
- un réfrigérant (4) de refroidissement du clinker de ciment dont la calcination est achevée,
- ainsi qu'un second filtre (12) monté en aval d'un premier filtre (11) de séparation de la poussière, dans le sens de la circulation des gaz évacués, ce second fille contenant un milieu filtrant carboné qui convient à capter les composés de NHₓ et/ou des métaux lourds et des oligo-éléments,
caractérisé par
a) un dispositif (13) disposé à proximité du premier filtre (11), relié à l'organe (14) de décharge de la poussière de ce dernier, conçu pour la diminution de la fraction des substances nocives à base de métaux lourds et de leurs composés à bas point d'ébullition se trouvant dans la poussière de filtration et qui comprend :
a₁) un four de désorption (16) pour le chauffage de la poussière de filtration à la température d'évaporation desdites substances nocives,
a₂) un séparateur de poussière (17) balayé par un mélange de vapeur et de gaz vecteur provenant du four de désorption,
a₃) un dispositif de refroidissement du mélange dépoussiéré de vapeur et de gaz vecteur, qui est disposé en aval du séparateur de poussière,
a₄) ainsi qu'un dispositif de filtration (19) disposé derrière le dispositif de refroidissement et dans lequel sont prévus plusieurs lits filtrants (19a, 19b) balayés en alternance par le mélange de vapeur et de gaz vecteur et contenant un milieu filtrant carboné destiné à séparer les substances nocives à base de métaux lourds et de leurs composés du mélange en circulation,
b) ainsi que par un conduit à poussière (15a') de recyclage de la poussière débarrassée des substances nocives dans le processus de production de clinker.

13. Dispositif selon la revendication 12, caractérisé en ce que le four de désorption (19) est un four chauffé indirectement, de préférence un four tubulaire rotatif chauffé indirectement.

14. Dispositif selon la revendication 12, caractérisé en ce que le dispositif de filtration (19) contient dans chaque lit filtrant (19a, 19b) un remplissage échangeable de coke actif et/ou de charbon actif constituant le milieu de filtration.

15. Dispositif selon la revendication 12, caractérisé en ce qu'un dispositif (15) de répartition des quantités de poussière comprenant deux embranchements (15a, 15b) est associé à l'organe (14) de décharge de la poussière du premier filtre (11), l'un des embranchements (15a) communiquant avec le côté d'admission du four de désorption (16) et le second embranchement (15b) communiquant avec l'installation à four.

16. Dispositif selon la revendication 12, caractérisé en ce que le côté de sortie des gaz du dispositif de filtration (19) est raccordé au conduit (11a) d'entrée des gaz évacués dans le premier filtre (11) par l'intermédiaire d'un ventilateur aspirant (20).
